# EUROPÄISCHE PATENTSCHRIFT

(11) **EP 2 221 219 B1**
(45) Veröffentlichungstag und Bekanntmachung des Hinweises auf die Patenterteilung: **31.05.2017**
(21) Anmeldenummer: 10001291.3
(22) Anmeldetag: 09.02.2010
(51) Int. Cl.: B60Q 1/12, B60Q 1/18, B60Q 1/28

(54) **Vorrichtung für eine Frontbeleuchtung eines Kraftfahrzeuges**
Device for the front lighting of a motor vehicle
Dispositif pour un éclairage avant d'un véhicule automobile

(30) Priorität: 24.02.2009 US 392060
(43) Veröffentlichungstag der Anmeldung: 25.08.2010
(73) Patentinhaber: Volkswagen Aktiengesellschaft, 38440 Wolfsburg (DE); Audi AG, 85045 Ingolstadt (DE)
(72) Erfinder: Heider, Christian, 93049 Regensburg (DE); Sampedro Diaz, Luis, 94041 Mountain View (US)

(56) Entgegenhaltungen:
- EP-A1- 1 471 305
- EP-A1- 1 502 814
- EP-A1- 1 612 474
- EP-A1- 1 637 397
- EP-A1- 1 759 922
- DE-A1-102005 007 626
- DE-A1-102006 004 764
- US-A1- 2003 202 357

## Beschreibung

Die vorliegende Erfindung betrifft eine Frontbeleuchtung für ein Kraftfahrzeug gemäß dem Oberbegriff des Patentanspruchs 1.

Es sind heute verschiedene adaptive Frontbeleuchtungen eines Fahrzeugs erhältlich. Diese Systeme versuchen, dynamisch eine Frontbeleuchtung oder Kurvenbeleuchtungsfunktionalität für ein Fahrzeug bereitzustellen und können im Handel unter den Namen "Adaptives Frontbeleuchtungsystem" ("AFS" - Adaptive oder Advanced Front-Lighting System) erhältlich sein.

Die zurzeit erhältlichen Frontbeleuchtungen verwenden typischerweise mechanische Vorrichtungen, um die Kurvenbeleuchtungsfunktionalität bereitzustellen. Zum Beispiel können Motoren, wie Schrittmotoren, eine Linse, einen Reflektor, eine Anbringung oder eine Lichtquelle eines Scheinwerfers oder ein gesamtes Lichtmodul drehen. Die Schrittmotoren können Signale zum Lenken des Lichtstrahls in horizontaler und/oder vertikaler Richtung empfangen. Als Funktion der Fahrzeuggeschwindigkeit und des Lenkradwinkels kann ein bestimmter Lenkwinkel des Lichtstrahls definiert werden. Zusätzlich kann ein typischer Bereich der Drehung des Lichtstrahls ±15 Grad nach links bzw. rechts und ±15 Grad nach oben bzw. nach unten betragen. Als Ergebnis kann eine Straße durch die Kurvenbeleuchtungsfunktionalität effektiver beleuchtet werden, wodurch Sicherheit und Komfort vergrößert werden.

Die Patentanmeldung DE 10 2005 014 953 A1 beschreibt ein Fahrzeug mit einer Matrix von LEDs zur Fahrzeugfrontbeleuchtung und eine Steuereinrichtung, die ein entgegenkommendes Fahrzeug auf einer Straße detektiert und eine auf das detektierte entgegenkommende Fahrzeug gerichtete LED lenkt, ausschaltet, dimmt oder durch eine Membran überdeckt.

Die Patentanmeldung DE 10 2006 039 182 A1 beschreibt ein Fahrzeug mit einer Lichtstrahlungseinrichtung mit zwei oder mehr LED-Segmenten und einer Steuereinrichtung zum Variieren der emittierten Strahlungsintensität der LED-Segmente.

Die US-Patentanmeldung mit der Publikationsnummer US 2007/0003108 beschreibt eine Vorrichtung mit mehreren Leuchtdioden (LEDs), die in einer Matrix angeordnet sind, um sowohl vertikale als auch horizontale Lichtlenkung zu erzielen. Wärmemanagement und Kosten können jedoch bei einer solchen Vorrichtung problematisch sein, weil die Genauigkeit eines solchen Systems direkt proportional zu der Anzahl benutzter LEDs ist.

Außerdem wurde ein adaptives Frontbeleuchtungssystem vorgeschlagen, das als "Pixellicht" ("Pixel Light") bezeichnet wird. Bei dieser Vorrichtung reflektieren Mikrospiegeleinrichtungen jeweils ein Pixel eines Lichtstrahls. Ferner ist der Lichtstrahl an Ort und Stelle fixiert, kann aber programmiert werden, um sich den Bedingungen vor einem Fahrzeug anzupassen.

Die internationale veröffentlichte PCT-Patentanmeldung Nr. PCT/IB2007/051355 beschreibt eine Vorrichtung, die ein Flüssigkristallelement vor einer Lichtquelle anordnet, um den Lichtstrahl zu lenken.

Die EP 1 637 397 A1 beschreibt eine Vorrichtung zum Bereitstellen eines Tagfahrlichtes mit mindestens drei Lichtquellen zum Bereitstellen verschiedener Lichtfunktionen, insbesondere einem Tagfahrlicht, einem Abblend- und Fernlicht, einer Nebelscheinwerferfunktion und einen Fahrtrichtungsanzeiger.

Die EP 1 759 922 A1 beschreibt eine Beleuchtungsvorrichtung zum Erzeugen eines Lichtbündels im sichtbaren Frequenzbereich und mit einer Strahlungsquelle zur Erzeugung eines Strahlungsbündels im infraroten Frequenzbereich.

Die US 2003/202357 A1 beschreibt eine Fahrzeugleuchte zum Bereitstellen verschiedener Beleuchtungsfunktionen, z.B. einem Ablend- und Fernlicht und einem Kurven- und Abbiegelicht. Die Erzeugung der Beleuchtungsfunktionen erfolgt dabei durch Abstrahlung des Lichts einer Lichtquelle über verschiedene Abschnitte, die mit in ihrer Lichtdurchlässigkeit manipulierbaren Materialen beschichtet sind.

Die EP 1 612 474 A1 beschreibt eine Beleuchtungsvorrichtung für ein Kraftfahrzeug zum Bereitstellen verschiedener Lichtfunktionen wie einem Tagfahrlicht, einem Abblend- und Fernlicht und einem Schlechtwetterlicht.

Die EP 1 471 305 A1 beschreibt auch eine Beleuchtungseinrichtung für ein Fahrzeug zum Bereitstellen verschiedener Lichtfunktionen, z.B. einem Tagfahrlicht, einem Abblend- und Fernlicht, einer Nebelscheinwerferfunktion sowie einem Kurven- oder Abbiegelicht. Die verschiedenen Lichtfunktionen werden dabei von einer Lichtquelle mittels wenigstens vier Reflektoren erzeugt, von denen einer in der Position veränderlich ist.

Die EP 1 502 814 A1 beschreibt eine Lichteinheit zur Erzeugung eines Abblendlichts und eines Kurvenlichts, bei der jeweils mehrere Leuchtdioden in einem Modul integriert sind, um jeweils eine der beiden Lichtfunktionen bereitzustellen.

Der Erfindung liegt die Aufgabe zu Grunde, eine verbesserte Frontbeleuchtung eines Kraftfahrzeuges bereitzustellen.

Diese Aufgabe wird mit den Merkmalen von Patentanspruch 1 gelöst. Vorteilhafte Weiterbildungen der Erfindung sind den Unteransprüchen entnehmbar.

Der Grundgedanke der Erfindung liegt darin, eine Frontbeleuchtung für ein Kraftfahrzeug zu schaffen, die ohne bewegliche Teile auskommt. Hierzu weist die Frontbeleuchtung ein Tagfahrlichtmodul und mehrere Halbleiterlichtquellen auf, von denen mindestens eine in einer vorgegebenen Position in dem Tagfahrlichtmodul des Kraftfahrzeuges integriert ist. Dies bedeutet, dass die mindestens eine Halbleiterlichtquelle in dem Tagfahrlichtmodul unbeweglich bzw. in einer fixierten Position angeordnet ist. Zur Erzeugung der Kurvenlicht- und/oder Abbiegelichtfunktion wird die mindestens eine Halbleiterlichtquelle nicht gedreht oder geschwenkt.

Die mindestens eine fixierte Halbleiterlichtquelle kann mindestens eine Leuchtdiode umfassen.

Die Frontbeleuchtung kann ferner ein optisches Element umfassen, das dafür ausgelegt ist, eine sanfte Lichtverteilung bereitzustellen. Das optische Element dient ferner dazu, dass von der Halbleiterlichtquelle emittierte Licht in mindestens einem definierten Winkelbereich abzustrahlen.

Das optische Element kann einen Reflektor und/oder eine Linse umfassen.

Die mindestens eine Halbleiterlichtquelle teilt sich einen Ort mit einer Lichtquelle des Tagfahrlichtmoduls.

Gemäß einer Ausführungsform sind mehrere Halbleiterlichtquellen vorgesehen, die auf mindestens eine der folgenden alternativen Weisen angeordnet sind: vertikal, horizontal, diagonal, in einer geraden Linie und in einer gekrümmten Linie.

Vorzugsweise bilden mehrere Halbleiterlichtquellen einen Lichtsektor, der dafür ausgelegt ist, dass von den Halbleiterlichtquellen emittierte Licht in mindestens einem definierten Winkelbereich abzustrahlen.

Des Weiteren ist eine Steuereinrichtung vorgesehen ist, die dafür ausgelegt ist, die mindestens eine Halbleiterlichtquelle unabhängig zu steuern.

Gemäß einer weiteren vorteilhaften Weiterbildung der Erfindung ist die Steuereinrichtung dafür ausgelegt, eine Intensität der mindestens einen Halbleiterlichtquelle zu variieren. Die variierende Intensität der mindestens einen Halbleiterlichtquelle kann hierbei eine der folgenden Alternativen umfassen: automatisches Dimmen, Komfort-Dimmen, steiles dynamisches Dimmen, sanftes dynamisches Dimmen und individuell definierte Dimmbetriebsarten.

Vorzugsweise ist die Steuereinrichtung dafür ausgelegt ist, automatisch und/oder manuell aktiviert zu werden.

Die Erfindung wird nun anhand von Ausführungsbeispielen mit Bezug zu den Zeichnungen erläutert.
- Fig. 1: ist eine schematische Ansicht einer herkömmlichen adaptiven Frontbeleuchtung eines Fahrzeugs.
- Fig. 2: ist eine schematische Draufsicht einer Beleuchtungsverteilung bei Verwendung einer herkömmlichen adaptiven Frontbeleuchtung eines Fahrzeugs.
- Fig. 3: ist ein schematisches Blockdiagramm einer herkömmlichen Vorrichtung zum Steuern der adaptiven Frontbeleuchtung eines Fahrzeugs.
- Fig. 4: zeigt beispielhafte Ausführungsformen einer elektronischen adaptiven Frontbeleuchtung eines Fahrzeugs.
- Fig. 5: zeigt beispielhafte Ausführungsformen einer elektronischen adaptiven Frontbeleuchtung eines Fahrzeugs.
- Fig. 6: ist eine schematische Draufsicht einer Beleuchtungsverteilung bei Verwendung einer beispielhaften Ausführungsform einer elektronischen adaptiven Frontbeleuchtung eines Fahrzeugs.
- Fig. 7: zeigt beispielhafte Ausführungsformen einer elektronischen adaptiven Frontbeleuchtung eines Fahrzeugs.
- Fig. 8: ist ein schematisches Blockdiagramm eine Vorrichtung zum Steuern der elektronischen adaptiven Frontbeleuchtung eines Fahrzeugs.
- Fig. 9: zeigt eine automatische Dimmbetriebsart einer elektronischen adaptiven Frontbeleuchtung eines Fahrzeugs.
- Fig. 10: zeigt eine Komfort-Dimmbetriebsart einer elektronischen adaptiven Frontbeleuchtung eines Fahrzeugs.
- Fig. 11: zeigt eine steile dynamische Dimmbetriebsart einer elektronischen adaptiven Frontbeleuchtung eines Fahrzeugs.
- Fig. 12: zeigt eine sanfte dynamische Dimmbetriebsart einer elektronischen adaptiven Frontbeleuchtung eines Fahrzeugs.
- Fig. 13: zeigt eine individuell definierte Dimmbetriebsart einer elektronischen adaptiven Frontbeleuchtung eines Fahrzeugs.

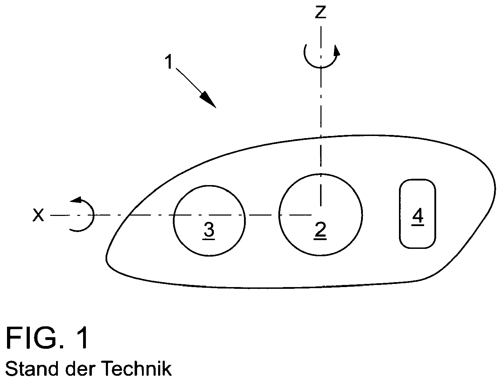

Fig. 1 zeigt eine schematische Ansicht einer herkömmlichen adaptiven Frontbeleuchtung 1 eines Fahrzeugs. Die Frontbeleuchtung 1 umfasst eine Abblend-Lichtquelle 2, eine Fernlicht-Lichtquelle 3 und eine Seitenmarkierungs-Lichtquelle 4. Gemäß der adaptiven Frontbeleuchtung 1 kann die Abblend-Lichtquelle 2 um die Z-Achse gedreht werden, um den horizontalen Lenkwinkel des Lichtstrahls zu ändern, und die Abblend-Lichtquelle 2 kann auch um die X-Achse gedreht werden, um den vertikalen Lenkwinkel des Lichtstrahls zu ändern. Diese Drehungen können durch Motoren wie zum Beispiel Schrittmotoren bewirkt werden.

Die in Fig. 1 gezeigte Frontbeleuchtung 1 zeigt einen linken Scheinwerfer; es versteht sich jedoch, dass ein rechter Scheinwerfer ein Spiegelbild von Fig. 1 wäre.

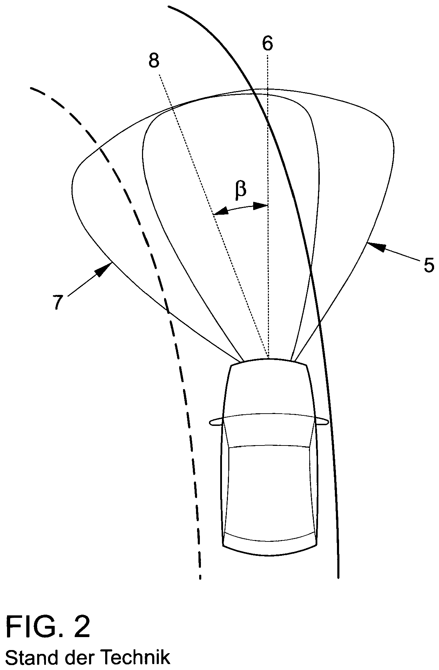

Fig. 2 zeigt eine schematische Draufsicht einer Beleuchtungsverteilung unter Verwendung der adaptiven Frontbeleuchtung 1 eines Fahrzeugs. Diese Figur zeigt eine Fahrsituation, in der das Fahrzeug auf einer Straße gefahren wird, die sich nach links krümmt. In einem Fahrzeug ohne eine adaptive Frontbeleuchtung 1 kann eine Standard-Lichtverteilung 5 mit einer Mittelachse 6 vor das Fahrzeug projiziert werden. Diese Standard-Lichtverteilung 5 kann nicht geändert werden, weil es dem Fahrzeug an adaptiver Frontbeleuchtung fehlt.

In einem Fahrzeug mit einer adaptiven Frontbeleuchtung 1 kann jedoch eine abgewinkelte Lichtverteilung 7 mit einer Mittelachse 8 nach vorne und auf die linke Seite des Fahrzeugs projiziert werden. Durch Drehen der Abblend-Lichtquelle 2 um die Z-Achse in Richtung der linken Seite des Fahrzeugs kann die abgewinkelte Lichtverteilung 7 projiziert werden, um Fahrersicherheit und -komfort zu vergrößern. Wie in Fig. 2 gezeigt, wurde die Abblend-Lichtquelle 2 zum Beispiel um einen Winkel β in Richtung der linken Seite des Fahrzeugs gedreht. Der Winkel β kann zum Beispiel auf der Basis einer Fahrzeuggeschwindigkeit, eines Lenkradwinkels, von Straßeneigenschaften usw. definiert werden.

Die abgewinkelte Lichtverteilung 7 der Frontbeleuchtung 1, wie in Fig. 2 gezeigt, wird für eine Fahrsituation, in der das Fahrzeug auf einer Straße fährt, die sich nach links krümmt, in Richtung der linken Seite des Fahrzeugs abgewinkelt. Es versteht sich jedoch, dass eine ähnliche abgewinkelte Lichtverteilung der Frontbeleuchtung 1 für die Fahrsituation, in der das Fahrzeug auf einer Straße fährt, die sich nach rechts krümmt, in Richtung der rechten Seite des Fahrzeugs abgewinkelt werden kann.

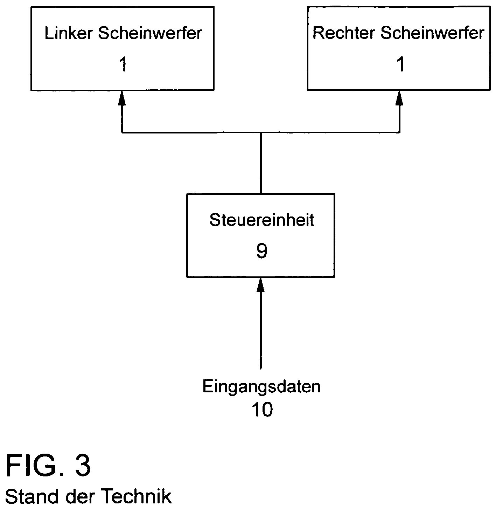

Fig. 3 zeigt ein schematisches Blockdiagramm einer herkömmlichen Vorrichtung zur Steuerung einer adaptiven Frontbeleuchtung eines Fahrzeugs. Die Vorrichtung kann einen linken Scheinwerfer 1, einen rechten Scheinwerfer 1, eine Steuereinrichtung 9 und Eingangsdaten 10 umfassen. Die Eingangsdaten 10 können Fahrzeugdaten umfassen, wie etwa Fahrzeuggeschwindigkeit, Lenkradwinkel, Straßeneigenschaften usw. Die Eingangsdaten 10 können der Steuereinrichtung 9 zugeführt werden, die dann den linken und rechten Scheinwerfer 1 der Vorrichtung jeweils steuert, um den Lichtstrahl zu lenken.

Diese mechanischen Vorrichtungen mit beweglichen Teilen können jedoch viele technische Probleme hervorrufen, wie zum Beispiel Platz, Gewicht und Qualitätseinschränkungen. Insbesondere müssen die beweglichen Teile so ausgelegt werden, dass sie nicht mit anderen Komponenten in dem Scheinwerfer kollidieren. Außerdem erfordern die beweglichen Teile zusätzliche mechanische Struktur und Motoren, wodurch unerwünschtes Gewicht zu dem Scheinwerfer hinzugefügt werden kann.

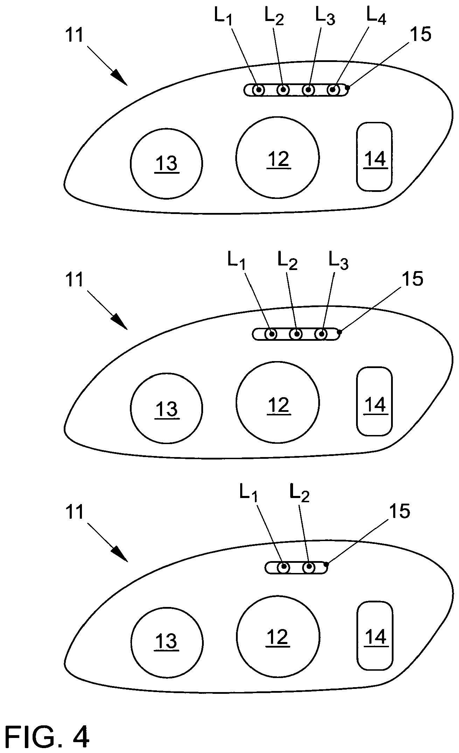

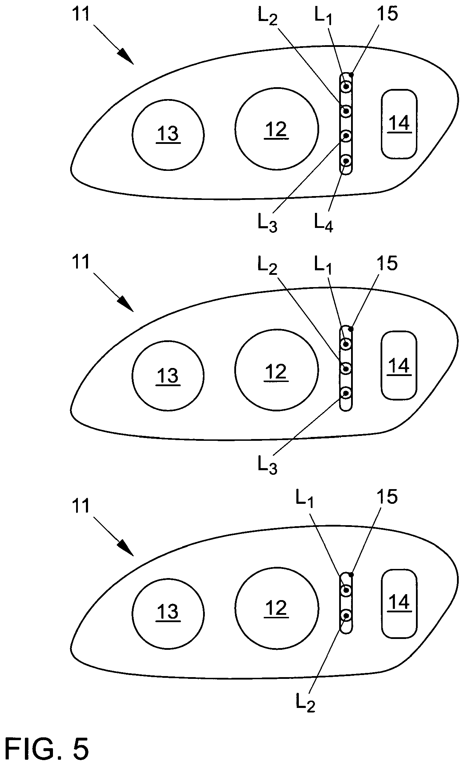

Fig. 4 und 5 zeigen beispielhafte Ausführungsformen einer elektronischen adaptiven Frontbeleuchtung (eAFS) eines Fahrzeugs. Diese Frontbeleuchtung 11 kann eine durchführbare und kosteneffektive Lösung zur Erzielung von dynamischer Kurvenlichtfunktionalität ohne bewegliche Teile bereitstellen.

Die beispielhaften Ausführungsformen der Frontbeleuchtung 11 wie in Fig. 4 und 5 gezeigt können Folgendes umfassen: eine Abblend-Lichtquelle 12, eine Fernlicht-Lichtquelle 13, eine Seitenmarkierungs-Lichtquelle 14 und ein erfindungsgemäßes Modul 15 der Leuchtdioden der elektronischen adaptiven Frontbeleuchtungsvorrichtung (eAFS LED). Die Abblend-, Fernlicht- und Seitenmarkierungs-Lichtquellen 12, 13, 14 können eine beliebige Beleuchtungstechnologie umfassen, wie zum Beispiel Glühlampen, Halogen, Xenon, LEDs usw. Die in Fig. 4 und 5 gezeigten beispielhaften Ausführungsformen umfassen eAFS-LED-Module 15 mit zwei, drei und vier Lichtsektoren L₁, L₂, L₃, L₄. Jeder Lichtsektor kann eine oder mehrere LEDs umfassen. Zusätzlich zeigt Fig. 4 die Lichtsektoren Lₓ in einer horizontalen Reihe angeordnet, während Fig. 5 die Lichtsektoren Lₓ in einer vertikalen Reihe angeordnet zeigt. Es versteht sich jedoch, dass die Frontbeleuchtung 11 nicht auf die dargestellten beispielhaften Ausführungsformen der Frontbeleuchtung 11 beschränkt ist. Die Anzahl der Lichtsektoren Lₓ kann variiert werden, und die Anordnung der Lichtsektoren Lₓ kann auch variiert werden, wie zum Beispiel horizontal, vertikal, diagonal, in einer geraden Linie, in einer gekrümmten Linie usw.

Die in Fig. 4 und 5 gezeigte Frontbeleuchtung 11 zeigt einen linken Scheinwerfer; es versteht sich jedoch, dass ein rechter Scheinwerfer ein Spiegelbild von Fig. 4 und 5 wäre.

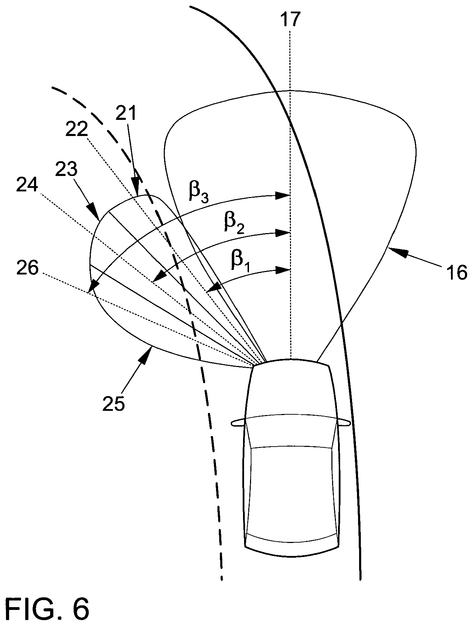

Fig. 6 zeigt eine schematische Draufsicht einer Beleuchtungsverteilung bei Verwendung einer beispielhaften Ausführungsform einer elektronischen adaptiven Frontbeleuchtung 11 eines Fahrzeugs. Diese Figur zeigt eine Fahrsituation, in der das Fahrzeug auf einer Straße fährt, die sich nach links krümmt. Zusätzlich zeigt diese Figur eine beispielhafte Ausführungsform der Frontbeleuchtung 11 mit einem eAFS-LED-Modul 15 mit drei Lichtsektoren L₁, L₂, L₃.

Wie in Fig. 6 gezeigt, projiziert die Abblend-Lichtquelle 12 eine Standardlichtverteilung 16, die eine Mittelachse 17 aufweist, vor das Fahrzeug. Zusätzlich projizieren die Lichtsektoren L₁, L₂, L₃ Lichtstrahlen 21, 23 bzw. 25, die Mittelachsen 22, 24 bzw. 26 aufweisen, in einem Winkel β₁, β₂ bzw. β₃ von der Mittelachse 17 der Standardlichtverteilung 16. Jeder der Lichtsektoren L₁, L₂, L₃ kann auf der Basis des LED-Typs und der für jeden Sektor erforderlichen Lichtmenge eine oder mehrere LEDs umfassen. Ferner kann die Lichtintensität jedes der Lichtsektoren unabhängig gesteuert werden. Auf diese Weise können die Lichtverteilungen 16, 21, 23, 25 auf der Basis einer bestimmten Fahrsituation, einer Fahrzeuggeschwindigkeit, eines Lenkradwinkels, einer Nähe zu anderen Fahrzeugen, eines gewählten Fahrkomforts- bzw. Verhaltensprogramms, einer Betätigung einer Eingabeeinrichtung wie etwa eines Schalters oder einer beliebigen anderen Mensch-Maschine-Schnittstelle, von Straßeneigenschaften wie Krümmung oder Breite usw. optimal gesteuert werden.

Jeder Lichtsektor L₁, L₂, L₃ kann in einem bestimmten Winkel β₁, β₂, β₃ definiert werden. Beispielhafte Werte für diese Winkel wären zum Beispiel β₁ = 5°, β₂ = 10°, β₃ = 15° oder β₁ = 10°, β₂ = 17°, β₃ = 24°. Es können auch andere Werte für diese Winkel verwendet werden.

Ferner kann jede LED jedes Lichtsektors ein optisches Element umfassen, um eine sanftere Lichtverteilung über jeden Lichtsektor hinweg sicherzustellen. Das optische Element kann eine Linse, einen Reflektor usw. umfassen. Das konkrete benutzte optische Element kann zum Beispiel von den konkreten Winkeln β₁, β₂, β₃ und der Größe des gewünschten Beleuchtungsbereichs für jeden Lichtsektor L₁, L₂, L₃ abhängen.

Die Lichtsektoren 21, 23, 25 der beispielhaften Frontbeleuchtung 11 wie in Fig. 6 gezeigt beleuchten bei der Fahrsituation, in der das Fahrzeug auf einer Straße fährt, die sich nach links krümmt, Bereiche vor dem Fahrzeug und links des Fahrzeugs. Es versteht sich jedoch, dass bei der Fahrsituation, in der das Fahrzeug auf einer Straße fährt, die sich nach rechts krümmt, ähnliche Lichtsektoren der beispielhaften Frontbeleuchtung 11 Bereiche vor dem Fahrzeug und rechts des Fahrzeugs beleuchten können.

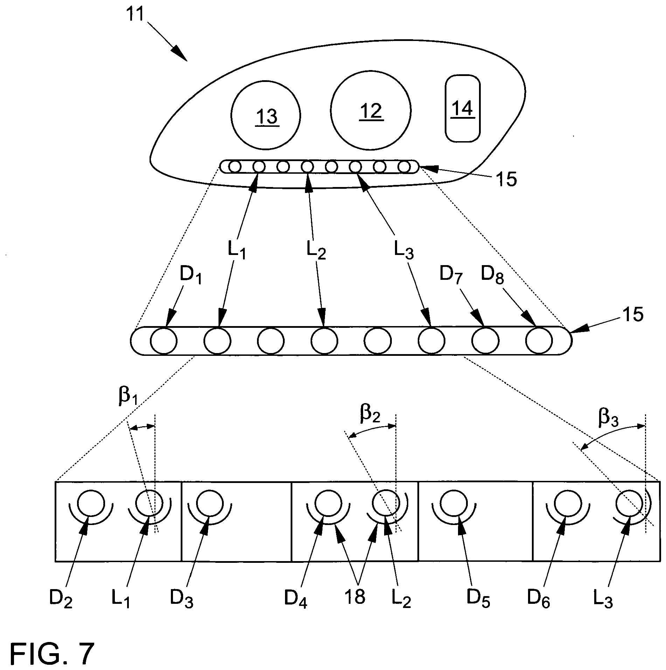

Fig. 7 zeigt eine beispielhafte Ausführungsform einer elektronischen adaptiven Frontbeleuchtung 11 eines Fahrzeugs. Die Frontbeleuchtung 11 kann eine Abblend-Lichtquelle 12, eine Fernlicht-Lichtquelle 13, eine Seitenmarkierungs-Lichtquelle 14 und ein integriertes Tagfahrlicht-(DRL-) und eAFS-LED-Modul 15 umfassen.

Wie bei dieser beispielhaften Ausführungsform gezeigt, umfasst das integrierte DRL- und eAFS-LED-Modul 15 Tagfahrlicht-LEDs D₁ bis D₈ und eAFS-LED-Lichtsektoren L₁ bis L₃. Es versteht sich, dass die Frontbeleuchtung 11 nicht auf die dargestellte beispielhafte Ausführungsform der Frontbeleuchtung 11 beschränkt ist. Die Anzahl der Lichtsektoren Lₓ kann variiert werden, und die Anordnung der Lichtsektoren Lₓ kann auch variiert werden, wie etwa horizontal, vertikal, diagonal, in einer geraden Linie, in einer gekrümmten Linie usw. Zusätzlich können sich die Lichtsektoren L₁ bis L₃ jeweils denselben Ort wie eines der Tagfahrlichter D₁ bis D₈ teilen. Wie in Fig. 7 gezeigt, teilt sich der Lichtsektor L₁ denselben Ort wie das Tagfahrlicht D₂, der Lichtsektor L₂ denselben Ort wie das Tagfahrlicht D₄ und der Lichtsektor L₃ denselben Ort wie das Tagfahrlicht D₆.

Fig. 7 zeigt ferner schematisch optische Elemente 18 als halbkreisförmige Elemente. Die optischen Elemente 18 können verwendet werden, um das Licht jeder DRL-LED und jeder eAFS-LED in eine bestimmte Richtung zu richten. Wie in Fig. 7 gezeigt, können die optischen Elemente 18 für jede DRL-LED das Licht im Wesentlichen vor die Front des Fahrzeugs richten, und die optischen Elemente 18 für jede eAFS-LED können das Licht in spezifizierte Winkel βₓ richten. Zum Beispiel kann das optische Element 18 für den eAFS-LED-Lichtsektor L₁ das Licht in einem Winkel β₁ auf die vordere und linke Seite des Fahrzeugs richten, das optische Element 18 für den eAFS-LED-Lichtsektor L₂ kann das Licht in einem Winkel β₂ auf die vordere und linke Seite des Fahrzeugs richten und das optische Element 18 für den eAFS-LED-Lichtsektor L₃ kann das Licht in einem Winkel β₃ auf die vordere und linke Seite des Fahrzeugs richten. Die optischen Elemente 18 umfassen Reflektoren, Linsen usw.

Die Lichtsektoren L₁, L₂, L₃ ders beispielhaften Frontbeleuchtung 11 wie in Fig. 7 gezeigt können in einem Winkel β₁, β₂ bzw. β₃ abgewinkelt werden, um bei der Fahrsituation, in der das Fahrzeug auf einer Straße fährt, die sich nach links krümmt, Bereiche vor dem Fahrzeug und links des Fahrzeugs zu beleuchten. Es versteht sich jedoch, dass ähnliche Lichtsektoren der beispielhaften Frontbeleuchtung 11 jeweils in ähnlichen Winkeln abgewinkelt werden können, um bei der Fahrsituation, in der das Fahrzeug auf einer Straße fährt, die sich nach rechts krümmt, Bereiche vor dem Fahrzeug und rechts des Fahrzeugs zu beleuchten.

Durch Integrieren der eAFS-LEDs und der DRL-LEDs in ein einziges Modul 15 können die eAFS-LEDs und die DRL-LEDs beide ähnliche LED-Technologie verwenden. Zusätzlich können die eAFS-LEDs und die DRL-LEDs beide Stromversorgungs- und Steuersignale von denselben Komponenten erhalten, wodurch Kosten gespart und Entwicklungsbemühungen verringert werden. Falls eine Frontbeleuchtung bereits DRL-LEDs enthält, können ferner die eAFS-LEDs in das Modul 15 integriert werden, während der ursprüngliche Gesamtentwurf der Frontbeleuchtung 11 aufrechterhalten wird.

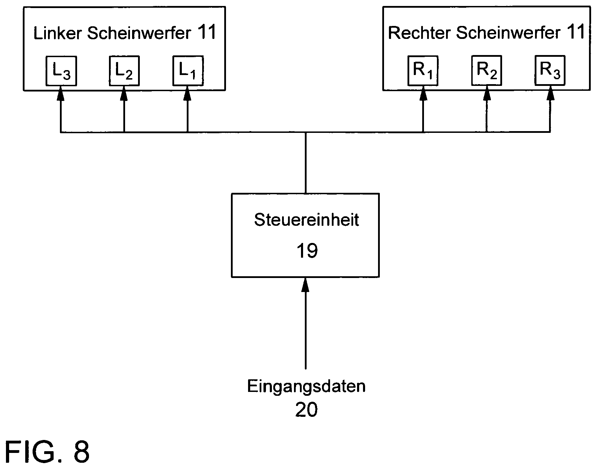

Fig. 8 zeigt ein schematisches Blockdiagramm einer Vorrichtung zur Steuerung einer elektronischen adaptiven Frontbeleuchtung eines Fahrzeugs. Die Frontbeleuchtung 11 enthält einen linken Scheinwerfer, der eAFS-LED-Lichtsektoren L₁, L₂, L₃ umfasst, einen rechtes Scheinwerfer, der eAFS-LED-Lichtsektoren R₁, R₂, R₃ umfasst und eine Steuereinrichtung 19, der Eingangsdaten 20 zugeführt werden. Die Eingangsdaten 20 können Fahrzeugdaten umfassen, wie zum Beispiel Fahrzeuggeschwindigkeit, Lenkradwinkel, Straßeneigenschaften usw. Die Eingangsdaten 20 können der Steuereinrichtung 19 zugeführt werden, die dann jeden der eAFS-Lichtsektoren L₁, L₂, L₃, R₁, R₂, R₃ des linken und rechten Scheinwerfers unabhängig steuert, um jeden der eAFS-LED-Lichtsektoren einzuschalten, auszuschalten und/oder seine Lichtintensität zu variieren.

LED-Technologie erlaubt eine sehr genaue und schnelle Erzielung von Zwischenluminanzwerten. Diese naturgemäße Dimmfähigkeit von LEDs kann verwendet werden, um beim Hinzufügen/Entfernen/Variieren von Licht links oder rechts der Standardlichtverteilung 16 verschiedene Fahrerlebnisse zu erzeugen. Durch Verwendung mehrerer Lichtdimmfunktionen, um ein beliebiges Erlebnis zwischen einer sehr sanften Zusatz-/Subtraktions-/Modifikations-Lichtsteuerung und einer sehr abrupten Ein/Aus-Lichtsteuerung zu erzeugen, kann ein völlig neues Fahrerlebnis erzielt werden.

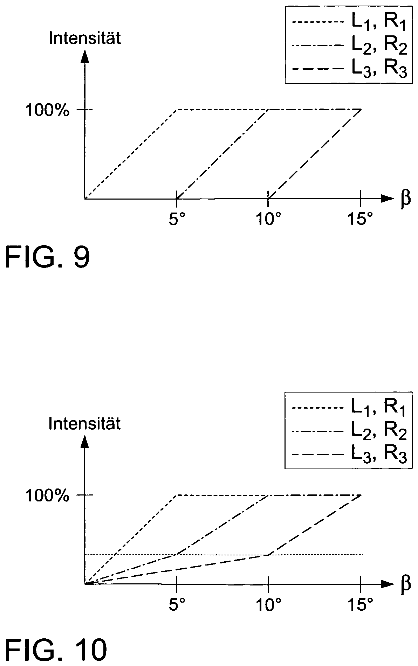

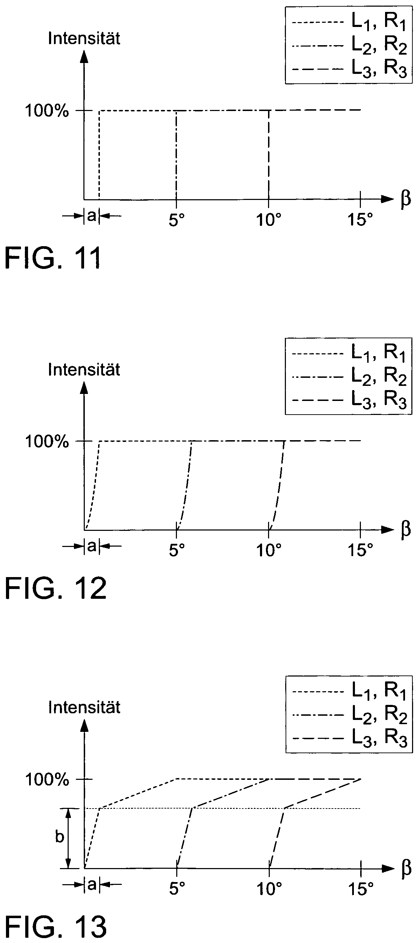

Fig. 9 bis 13 zeigen beispielhafte Lichtdimmbetriebsarten zum Erzeugen vielfältiger Fahrerlebnisse. Fig. 9 zeigt eine automatische Dimmbetriebsart, Fig. 10 zeigt eine Komfort-Dimmbetriebsart, Fig. 11 zeigt eine steile dynamische Dimmbetriebsart, Fig. 12 zeigt eine sanfte dynamische Dimmbetriebsart und Fig. 13 zeigt eine individuell definierte Dimmbetriebsart einer elektronischen adaptiven Frontbeleuchtung eines Fahrzeugs.

In diesen Figuren repräsentiert die vertikale Achse die Lichtintensität von 0% bis 100%. Die horizontale Achse repräsentiert den Winkel β, in den die Gesamtlichtverteilung zu richten ist. Bei den beispielhaften Ausführungsformen von Fig. 9 bis 13 ist der Winkel β als zwischen 0° und 15° definiert, und die Mittelachsen der Lichtsektoren L₁ und R₁, L₂ und R₂ und L₃ und R₃ sind als 5°, 10° bzw. 15° links oder rechts der Standardlichtverteilung definiert.

Bei der in Fig. 9 dargestellten automatischen Dimmbetriebsart besitzt die Lichtintensität jedes der Lichtsektoren eine lineare Beziehung mit dem Winkel β, d.h. die Lichtintensität ist direkt proportional zu dem Winkel β. Zum Beispiel nimmt die Lichtintensität des Lichtsektors L₁ linear von 0% auf 100% zu, wenn der Winkel β von 0° auf 5° zunimmt, und bleibt bei einem Winkel β von mehr als 5° konstant bei 100%. Zusätzlich bleibt die Lichtintensität des Lichtsektors L₂ auf 0%, wenn der Winkel β zwischen 0° bis 5° liegt, nimmt linear von 0% auf 100% zu, wenn der Winkel β von 5° auf 10° zunimmt, und bleibt bei einem Winkel β von mehr als 10° konstant bei 100%. Schließlich bleibt die Lichtintensität des Lichtsektors L₃ auf 0%, wenn der Winkel β zwischen 0° bis 10° liegt, nimmt linear von 0% auf 100% zu, wenn der Winkel β von 10° auf 15° zunimmt, und bleibt bei einem Winkel β von mehr als 15° konstant bei 100%.

In der in Fig. 10 dargestellten Komfort-Dimmbetriebsart besitzt die Lichtintensität jedes der Lichtsektoren eine andere lineare Beziehung mit dem Winkel β. Zum Beispiel nimmt die Lichtintensität des Lichtsektors L₁ linear von 0% auf 100% zu, wenn der Winkel β von 0° auf 5° zunimmt, und bleibt bei einem Winkel β von mehr als 5° konstant bei 100%. Zusätzlich nimmt die Lichtintensität des Lichtsektors L₂ linear auf einen bestimmten Wert zu, wenn der Winkel β von 0° auf 5° zunimmt, nimmt dann linear anders von dem bestimmten Wert auf 100% zu, wenn der Winkel β von 5° auf 10° zunimmt, und bleibt bei einem Winkel β von mehr als 10° konstant bei 100%. Schließlich nimmt die Lichtintensität des Lichtsektors L₃ linear auf einen bestimmten Wert zu, wenn der Winkel β von 0° auf 10° zunimmt, nimmt dann linear anders von dem bestimmten Wert auf 100% zu, wenn der Winkel β von 10° auf 15° zunimmt, und bleibt bei einem Winkel β von mehr als 15° konstant bei 100%.

Bei der in Fig. 11 dargestellten steilen dynamischen Dimmbetriebsart folgt die Lichtintensität jedes der Lichtsektoren einer Schrittfunktion auf der Basis des Winkels β, d.h. die Lichtintensität ist auf der Basis des Winkels β entweder ein- oder ausgeschaltet. Zum Beispiel führt die Lichtintensität des Lichtsektors L₁ bei einem Offsetwert "a" zwischen Werten des Winkels β von 0° bis 5° einen Schritt von 0% auf 100% aus und bleibt bei einem Winkel β von mehr als dem Offsetwert "a" konstant bei 100%. Zusätzlich bleibt die Lichtintensität des Lichtsektors L₂ bei 0%, wenn der Winkel β zwischen 0° und 5° liegt, führt einen Schritt von 0% auf 100% aus, wenn der Winkel β 5° ist, und bleibt bei einem Winkel β von mehr als 5° konstant bei 100%. Schließlich bleibt die Lichtintensität des Lichtsektors L₃ bei 0%, wenn der Winkel β zwischen 0° und 10° liegt, führt einen Schritt von 0% auf 100% aus, wenn der Winkel β 10° beträgt, und bleibt bei einem Winkel β von mehr als 10° konstant bei 100%.

Bei der in Fig. 12 gezeigten sanften dynamischen Dimmbetriebsart nimmt die Lichtintensität jedes der Lichtsektoren exponentiell zu einer Schrittfunktion auf der Basis des Winkels β zu, d.h. die Lichtintensität wird auf der Basis des Winkels β exponentiell eingeschaltet. Zum Beispiel nimmt die Lichtintensität des Lichtsektors L₁ exponentiell von 0% auf 100% zu, wenn der Winkel β von 0° bis auf einen Offsetwert "a" zunimmt, und bleibt bei einem Winkel β von mehr als dem Offsetwert "a" konstant bei 100%. Zusätzlich bleibt die Lichtintensität des Lichtsektors L₂ bei 0%, wenn der Winkel β zwischen 0° und 5° beträgt, nimmt exponentiell von 0% auf 100% zu, wenn der Winkel β von 5° bis auf (5° + Offsetwert "a") zunimmt, und bleibt bei einem Winkel β von mehr als (5° + Offsetwert "a") konstant bei 100%. Schließlich bleibt die Lichtintensität des Lichtsektors L₃ bei 0%, wenn der Winkel β zwischen 0° und 10° beträgt, nimmt exponentiell von 0% auf 100% zu, wenn der Winkel β von 10° bis auf (10° + Offsetwert "a") zunimmt, und bleibt bei einem Winkel β von mehr als (10° + Offsetwert "a") konstant bei 100%.

Bei der in Fig. 13 gezeigten individuell definierten Dimmbetriebsart folgt die Lichtintensität jedes der Lichtsektoren einer individuell definierten Beziehung mit dem Winkel β für jeden Sektor. Zum Beispiel nimmt die Lichtintensität des Lichtsektors L₁ linear von 0% bis auf einen bestimmten Wert "b" zu, wenn der Winkel β von 0° bis auf einen Offsetwert "a" zunimmt, nimmt linear von dem bestimmten Wert "b" auf 100% zu, wenn der Winkel β von dem Offsetwert "a" auf 5° zunimmt, und bleibt bei einem Winkel β von mehr als 5° konstant bei 100%. Zusätzlich bleibt die Lichtintensität des Lichtsektors L₂ bei 0%, wenn der Winkel β zwischen 0° und 5° beträgt, nimmt linear auf einen bestimmten Wert "b" zu, wenn der Winkel β von 5° bis auf (5° + Offsetwert "a") zunimmt, nimmt dann linear von dem bestimmten Wert "b" auf 100% zu, wenn der Winkel β von (5° + Offsetwert "a") auf 10° zunimmt, und bleibt bei einem Winkel β von mehr als 10° konstant bei 100%. Schließlich bleibt die Lichtintensität des Lichtsektors L₃ bei 0%, wenn der Winkel β zwischen 0° und 10° beträgt, nimmt linear auf einen bestimmten Wert "b" zu, wenn der Winkel β von 10° bis auf (10° + Offsetwert "a") zunimmt, nimmt dann linear von dem bestimmten Wert "b" auf 100% zu, wenn der Winkel β von (10° + Offsetwert "a") auf 15° zunimmt, und bleibt bei einem Winkel β von mehr als 15° konstant bei 100%.

Wie in Fig. 11 bis 13 dargestellt, soll der Offsetwert "a" ein unerwünschtes Flackern des Lichts vermeiden, wenn der Winkel β geringfügig um 0° herum variiert, was während realer Fahrsituationen häufig auftreten kann. Zusätzlich können wie in Fig. 13 für die individuell definierte Dimmbetriebsart dargestellt der Offsetwert "a" und der bestimmte Wert "b" individuell definiert werden, um den Präferenzen eines Fahrers, einem bestimmten Fahrzeug, einem Fahrzeughersteller usw. zu entsprechen.

Ferner können die in Fig. 9 bis 13 dargestellten Dimmbetriebsarten automatisch aktiviert werden, wenn andere variable Steuerelemente eines Fahrzeugs aktiviert werden, wie zum Beispiel auf der Basis der haptischen Rückmeldung des Lenkrads, der haptischen Rückmeldung der Pedale, der haptischen Rückmeldung der Aufhängung, des Motorverhaltens usw. Als Alternative können die in Fig. 9 bis 13 dargestellten Dimmbetriebsarten durch einen Fahrer manuell aktiviert und unabhängig modifiziert werden, wie zum Beispiel durch Verwendung eines eigenen Menüs in den Fahrzeugsteuerelementen, durch einen eigenen Schalter usw.

Die beispielhaften Ausführungsformen der elektronischen adaptiven Frontbeleuchtung (eAFS) 11 eines Fahrzeugs können schneller und kosteneffektiver als andere zur Zeit erhältliche adaptive Frontbeleuchtungssysteme (AFS) implementiert werden. Durch ausschließliche Verwendung von Halbleiterlichtquellen, wie LEDs, für die Bereitstellung einer zusätzlichen Beleuchtung vorderer oder seitlicher Peripherieregionen des Fahrzeugs kann eine Kurvenlichtfunktionalität erzielt werden. Die standardmäßige und rechtlich vorgeschriebene Frontlichtverteilung kann somit durch eine beliebige bekannte Art einer Beleuchtungstechnologie erreicht werden, darunter Glühlampen, Halogen, Xenon usw.

Die beispielhaften Ausführungsformen der elektronischen adaptiven Frontbeleuchtung (eAFS) 11 des Fahrzeugs können zusätzliche Vorteile gewährleisten, wie etwa geringere Kosten, höhere Durchführbarkeit, vereinfachte Herstellbarkeit, verbessertes Fahrerlebnis, Komfortgewinn und Beseitigung beweglicher Teile. Die Frontbeleuchtung 11 enthält zur Erzeugung der Kurvenlichtfunktionalität lediglich LEDs, ihre jeweilige Ansteuerelektronik und eine Wärmemanagementeinrichtung. Zusätzlich kann die Frontbeleuchtung 11 aufgrund der kleinen Größe von LEDs ohne signifikante Auswirkung oder Modifikation des existierenden Stylings des Fahrzeugs verwendet werden, während die Funktionalität des Fahrzeugs signifikant vergrößert wird. Im Hinblick auf die unabhängige Steuerung kann die Frontbeleuchtung 11 eine unabhängig erzeugte und gesteuerte Kurvenlichtfunktionalität in verschiedenen Peripheriewinkeln des Fahrzeugs erlauben. Die Frontbeleuchtung 11 kann verschiedene Beleuchtungsmuster bereitstellen, die zum Beispiel auf der Basis des Fahrverhaltens automatisch durch das Fahrzeug gesteuert oder durch den Fahrer manuell gesteuert werden können. Schließlich kann die Frontbeleuchtung 11 die Bereitstellung einer Kurvenlicht- oder Abbiegelichtfunktion ohne Verwendung zusätzlicher bewegliche Teile erlauben.

### Bezugszeichenliste

- 1, 11: Frontbeleuchtung
- 2: Abblend-Lichtquelle
- 3: Fernlicht-Lichtquelle
- 4: Seitenmarkierungs-Lichtquelle
- 5: Standard-Lichtverteilung
- 6: Mittelachse
- 7: abgewinkelte Lichtverteilung
- 8: Mittelachse
- 9, 19: Steuereinrichtung
- 10: Eingangsdaten
- 12: Abblend-Lichtquelle
- 13: Fernlicht-Lichtquelle
- 14: Seitenmarkierungs-Lichtquelle
- 15: Tagfahrlichtmodul
- 16: Standardlichtverteilung
- 17, 22, 24, 26: Mittelachse
- 18: optisches Element
- 20: Eingangsdaten
- 21, 23, 25: Lichtstrahl
- L₁, L₂, L₃, L_{4,} Lₓ: Lichtsektor
- R₁, R₂, R_{3,} Rₓ: Lichtsektor
- β₁, β₂, β_{3,} βₓ: Winkel
- D₁ bis D₈: Halbleiterlichtquelle

## Patentansprüche

1. Frontbeleuchtung (11) für ein Kraftfahrzeug mit einem Tagfahrlichtmodul (15) und mit mehreren Halbleiterlichtquellen (D₁ bis D₈; L₁ bis L₃), von denen mindestens eine Halbleiterlichtquelle (L₁ bis L₃) dafür ausgelegt ist, zumindest einen Bereich seitlich des Kraftfahrzeuges zur Erzeugung einer Kurvenlicht- und/oder Abbiegelichtfunktion zu beleuchten,
**dadurch gekennzeichnet, dass**
die mindestens eine der Halbleiterlichtquellen (L₁ bis L₃) in einer vorgegebenen Position in dem Tagfahrlichtmodul (15) des Kraftfahrzeuges unbeweglich integriert ist, in der sie einen Ort mit einer Lichtquelle (D₁ bis D₈) des Tagfahrlichtmoduls teilt.

2. Frontbeleuchtung (11) nach Anspruch 1, **dadurch gekennzeichnet, dass** die mindestens eine der Halbleiterlichtquellen (L₁ bis L₃) mindestens eine Leuchtdiode umfasst.

3. Frontbeleuchtung (11) nach Anspruch 1 oder 2, **dadurch gekennzeichnet, dass** der mindestens einen der Halbleiterlichtquellen (L₁ bis L₃) zumindest ein optisches Element (18) zugeordnet ist, das dafür ausgelegt ist, das von der Halbleiterlichtquelle (L₁ bis L₃) emittierte Licht in mindestens einem definierten Winkelbereich (β₁, β₂, β₃, βₓ) abzustrahlen.

4. Frontbeleuchtung (11) nach wenigstens einem der vorhergehenden Ansprüche, **dadurch gekennzeichnet, dass** das zumindest eine optische Element (18) einen Reflektor und/oder eine Linse umfasst.

5. Frontbeleuchtung (11) nach wenigstens einem der vorhergehenden Ansprüche, **dadurch gekennzeichnet, dass** mehrere Halbleiterlichtquellen (D₁ bis D₈; L₁ bis L₃) vorgesehen sind, die auf mindestens eine der folgenden alternativen Weisen angeordnet sind: vertikal, horizontal, diagonal, in einer geraden Linie und in einer gekrümmten Linie.

6. Frontbeleuchtung (11) nach wenigstens einem der vorhergehenden Ansprüche, **dadurch gekennzeichnet, dass** mehrere Halbleiterlichtquellen (L₁ bis L₃) einen Lichtsektor bilden, der dafür ausgelegt ist, dass von den Halbleiterlichtquellen (L₁ bis L₃) emittierte Licht in mindestens einem definierten Winkelbereich (β₁, β₂, β_{3,} βₓ) abzustrahlen.

7. Frontbeleuchtung (11) nach wenigstens einem der vorhergehenden Ansprüche, **dadurch gekennzeichnet, dass** eine Steuereinrichtung (9, 19) vorgesehen ist, die dafür ausgelegt ist, mindestens eine der Halbleiterlichtquellen (D₁ bis D₈; L₁ bis L₃) unabhängig zu steuern.

8. Frontbeleuchtung (11) nach Anspruch 7, **dadurch gekennzeichnet, dass**, die Steuereinrichtung (9, 19) dafür ausgelegt ist, mindestens eine der Halbleiterlichtquellen (D₁ bis D₈; L₁ bis L₃) in Abhängigkeit einer bestimmten Fahrsituation, einer Fahrzeuggeschwindigkeit, einem Lenkradwinkel, einer Entfernung zu anderen Fahrzeugen oder Objekten, einem gewählten Fahrprogramm, einer Betätigung einer Eingabeeinrichtung und/oder der Straßeneigenschaften unabhängig zu steuern.

9. Frontbeleuchtung (11) nach Anspruch 7, **dadurch gekennzeichnet, dass** die Steuereinrichtung (9, 19) dafür ausgelegt ist, eine Intensität mindestens einer der Halbleiterlichtquellen (D₁ bis D₈; L₁ bis L₃) zu variieren.

10. Frontbeleuchtung (11) nach Anspruch 9, **dadurch gekennzeichnet, dass** die variierende Intensität der mindestens einen der Halbleiterlichtquellen (D₁ bis D₈) mindestens eine der folgenden Alternativen umfasst: automatisches Dimmen, Komfort-Dimmen, steiles dynamisches Dimmen, sanftes dynamisches Dimmen oder individuell definierte Dimmbetriebsarten.

11. Frontbeleuchtung (11) nach Anspruch 7, **dadurch gekennzeichnet, dass** die Steuereinrichtung (9, 19) dafür ausgelegt ist, automatisch und/oder manuell aktiviert zu werden.

## Claims

1. Front lighting system (11) for a motor vehicle comprising a daytime running light module (15) and comprising a plurality of semiconductor light sources (D₁ to D₈; L₁ to L₃), at least one semiconductor light source (L₁ to L₃) of which is designed to illuminate at least one region laterally with respect to the motor vehicle in order to generate a cornering light and/or turning light function,
**characterized in that**
the at least one of the semiconductor light sources (L₁ to L₃) is integrated in an immobile manner in a predefined position in the daytime running light module (15) of the motor vehicle, in which position it shares a location with a light source (D₁ to D₈) of the daytime running light module.

2. Front lighting system (11) according to Claim 1, **characterized in that** the at least one of the semiconductor light sources (L₁ to L₃) comprises at least one light-emitting diode.

3. Front lighting system (11) according to Claim 1 or 2, **characterized in that** the at least one of the semiconductor light sources (L₁ to L₃) is assigned at least one optical element (18) which is designed to radiate the light emitted by the semiconductor light source (L₁ to L₃) in at least one defined angle range (β₁, β₂, β₃, βₓ).

4. Front lighting system (11) according to at least one of the preceding claims, **characterized in that** the at least one optical element (18) comprises a reflector and/or a lens.

5. Front lighting system (11) according to at least one of the preceding claims, **characterized in that** a plurality of semiconductor light sources (D₁ to D₈; L₁ to L₃) are provided, which are arranged in at least one of the following alternative ways: vertically, horizontally, diagonally, in a straight line, and in a curved line.

6. Front lighting system (11) according to at least one of the preceding claims, **characterized in that** a plurality of semiconductor light sources (L₁ to L₃) form a light sector that is designed to radiate the light emitted by the semiconductor light sources (L₁ to L₃) in at least one defined angle range (β₁, β₂, β₃, βₓ).

7. Front lighting system (11) according to at least one of the preceding claims, **characterized in that** a control device (9, 19) is provided, which is designed to independently control at least of the semiconductor light sources (D₁ to D₈; L₁ to L₃).

8. Front lighting system (11) according to Claim 7, **characterized in that** the control device (9, 19) is designed to independently control at least one of the semiconductor light sources (D₁ to D₈; L₁ to L₃) depending on a specific driving situation, a vehicle speed, a steering wheel angle, a distance from other vehicles or objects, a selected driving program, an actuation of an input device and/or the road properties.

9. Front lighting system (11) according to Claim 7, **characterized in that** the control device (9, 19) is designed to vary an intensity of at least one of the semiconductor light sources (D₁ to D₈; L₁ to L₃).

10. Front lighting system (11) according to Claim 9, **characterized in that** the varying intensity of the at least one of the semiconductor light sources (D₁ to D₈) comprises at least one of the following alternatives: automatic dimming, comfort dimming, steep dynamic dimming, smooth dynamic dimming or individually defined dimming operating modes.

11. Front lighting system (11) according to Claim 7, **characterized in that** the control device (9, 19) is designed to be activated automatically and/or manually.

## Revendications

1. Eclairage avant (11) destiné à un véhicule automobile comportant un module de feu de jour (15) et comportant plusieurs sources de lumière à semi-conducteur (D₁ à D₈ ; L₁ à L₃), parmi lesquelles au moins une source de lumière à semi-conducteur (L₁ à L₃) est conçue pour éclairer au moins une zone située sur le côté du véhicule automobile afin de générer une fonction d'éclairage en courbe et/ou en virage, **caractérisé en ce que** l'au moins une des sources de lumière à semi-conducteur (L₁ à L₃) est intégrée de manière fixe à une position prédéterminée dans le module de feu de jour (15) du véhicule automobile, position à laquelle elle partage un emplacement avec une source de lumière (D₁ à D₈) du module de feu de jour.

2. Eclairage avant (11) selon la revendication 1, **caractérisé en ce que** l'au moins une des sources de lumière à semi-conducteur (L₁ à L₃) comprend au moins une diode électroluminescente.

3. Eclairage avant (11) selon la revendication 1 ou 2, **caractérisé en ce qu'**au moins un élément optique (18) est associé à l'au moins une des sources de lumière à semi-conducteur (L₁ à L₃), lequel élément optique est conçu pour rayonner une lumière émise par la source de lumière à semi-conducteur (L₁ à L₃) dans au moins un domaine angulaire défini (β₁, β₂, β₃, βₓ).

4. Eclairage avant (11) selon au moins l'une des revendications précédentes, **caractérisé en ce que** l'au moins un élément optique (18) comprend un réflecteur et/ou une lentille.

5. Eclairage avant (11) selon au moins l'une des revendications précédentes, **caractérisé en ce qu'**il est prévu plusieurs sources de lumière à semi-conducteur (D₁ à D₈ ; L₁ à L₃) qui sont agencées selon au moins l'une des différentes méthodes suivantes : verticalement, horizontalement, en diagonale, sur une ligne droite et sur une ligne incurvée.

6. Eclairage avant (11) selon au moins l'une des revendications précédentes, **caractérisé en ce que** plusieurs sources de lumière à semi-conducteur (L₁ à L₃) forment un secteur lumineux qui est approprié pour rayonner une lumière émise par les sources de lumière à semi-conducteur (L₁ à L₃) dans au moins un domaine angulaire défini (β₁, β₂, β₃, βₓ).

7. Eclairage avant (11) selon au moins l'une des revendications précédentes, **caractérisé en ce qu'**il est prévu un dispositif de commande (9, 19) qui est approprié pour commander indépendamment au moins l'une des sources de lumière à semi-conducteur (D₁ à D₈ ; L₁ à L₃).

8. Eclairage avant (11) selon la revendication 7, **caractérisé en ce que** le dispositif de commande (9, 19) est approprié pour commander indépendamment au moins l'une des sources de lumière à semi-conducteur (D₁ à D₈ ; L₁ à L₃) en fonction d'une situation de conduite déterminée, d'une vitesse du véhicule, d'un angle de braquage, d'une distance par rapport à d'autres véhicules ou objets, d'un programme de conduite sélectionné, d'un actionnement d'un dispositif de saisie et/ou de propriétés des routes.

9. Eclairage avant (11) selon la revendication 7, **caractérisé en ce que** le dispositif de commande (9, 19) est approprié pour faire varier une intensité d'au moins l'une des sources de lumière à semi-conducteur (D₁ à D₈ ; L₁ à L₃).

10. Eclairage avant (11) selon la revendication 9, **caractérisé en ce que** l'intensité variable de l'au moins une des sources de lumière à semi-conducteur (D₁ à D₈) comprend au moins l'une des alternatives suivantes : atténuation automatique, atténuation de confort, atténuation dynamique brusque, atténuation dynamique progressive ou mode d'atténuation défini individuellement.

11. Eclairage avant (11) selon la revendication 7, **caractérisé en ce que** le dispositif de commande (9, 19) est approprié pour être activé automatiquement et/ou manuellement.
